Europäisches Patentamt

(19) European Patent Office

Office européen des brevets

(11) Numéro de publication: **0 130 494**
**B1**

(12) **FASCICULE DE BREVET EUROPEEN**

(45) Date de publication du fascicule du brevet:
**07.01.88**

(21) Numéro de dépôt: **84107148.3**

(22) Date de dépôt: **22.06.84**

(51) Int. Cl.⁴: **E 21 B 4/00,** F 16 C 27/08,
F 16 C 19/54, F 16 J 15/36

(54) **Procédé de protection d'un système mécanique à mouvements limités contre un milieu agressif.**

(30) Priorité: **27.06.83 FR 8310569**
**03.08.83 FR 8312808**

(43) Date de publication de la demande:
**09.01.85 Bulletin 85/2**

(45) Mention de la délivrance du brevet:
**07.01.88 Bulletin 88/1**

(84) Etats contractants désignés:
**BE DE FR GB NL**

(56) Documents cités:
**EP - A - 0 026 100**
**GB - A - 2 082 267**

(73) Titulaire: **ALSTHOM, 38, avenue Kléber, F-75784 Paris Cédex 16 (FR)**

(72) Inventeur: **Obrecht, Georges, "Le Canton" G.15, F-38800 Pont-de-Claix (FR)**

(74) Mandataire: **Weinmiller, Jürgen et al, Lennéstrasse 9 Postfach 24, D-8133 Feldafing (DE)**

ACTORUM AG

## Description

L'invention concerne un procédé de protection d'un système mécanique à mouvements limités contre un milieu agressif.

On entend ici par système mécanique un ensemble comportant plusieurs pièces mobiles présentant des surfaces fonctionnelles dures. De telles pièces sont constituées par exemple d'acier. Les surfaces fonctionnelles coopèrent entre elles par roulement, glissement, venue en butée ou analogue, c'est-à-dire que des forces sont transmises par contact au moins temporaire entre ces surfaces dures. Un engrenage ou un roulement à billes constituent un tel système, alors qu'une simple suspension à ressort ne le constitue pas.

Les mouvements du système sont dit ici limités lorsque les déplacements relatifs des divers points de pièces fonctionnelles ne dépassent jamais, à partir d'une configuration initiale du système, une amplitude linéaire de l'ordre des dimensions du système. Un tel mouvement limité peut être constitué par exemple par un déplacement alternatif permanent d'une pièce à l'intérieur du système, ou par un déplacement unidirectionnel d'une petite amplitude se produisant une seule fois pendant la durée de vie du système. Il ne peut par contre pas être constitué par la rotation permanente unidirectionnelle d'un arbre autour de son axe.

Quant au milieu agressif il peut être par exemple chimiquement agressif, ou charrier des particules abrasives susceptibles de détériorer les surfaces fonctionnelles du système mécanique. De telles conditions se rencontrent par exemple au fond d'un puits dont le forage est réalisé à l'aide d'un moteur souterrain. Ce moteur est constitué par une turbine entraînée par la boue de forage. Celle-ci est injectée sous pression dans le haut du train de tubes et remonte autour des tubes. Elle charrie des particules de silice. Des systèmes mécaniques à mouvements limités peuvent être présents au fond du puits. Ils doivent alors être protégés contre l'érosion de la boue. Un tel système sera décrit plus loin.

Indépendamment de la nature du milieu agressif dans lequel un système mécanique est destiné à être utilisé, ce système comporte, de manière connue, une enceinte rigide de protection qui entoure les surfaces fonctionnelles ainsi qu'un espace intérieur nécessaire aux déplacements de ces surfaces. Cette enceinte présente au moins une ouverture de sortie qui permet le passage d'une pièce de liaison en laissant un jeu de sortie autour de celle-ci pour en permettre les mouvements. Cette pièce de liaison est solidaire d'une pièce fonctionnelle dont elle transmet les mouvements à l'extérieur du système.

Cette enceinte de protection peut être constituée par la surface extérieure d'une pièce fonctionnelle, ou par un carter spécialement prévu pour la protection.

Elle permet d'assurer une protection efficace contre certains éléments agressifs, par exemple contre l'érosion des surfaces fonctionnelles par des débris solides de diamètre supérieur audit jeu de sortie. Mais elle est souvent insuffisante contre la corrosion chimique (oxydation par exemple) et contre l'érosion par des particules abrasives fines. C'est pourquoi divers procédés sont bien connus pour compléter la protection des surfaces fonctionnelles.

L'un d'eux comporte une opération de remplissage de l'enceinte de protection avec un produit permettant les mouvements mutuels des pièces fonctionnelles tout en empêchant le milieu extérieur de venir au contact des surfaces fonctionnelles.

Le produit de remplissage utilisé (voir par exemple le document GB-A 2 082 267) est par exemple une graisse de consistance suffisante pour l'empêcher de s'échapper par le jeu de sortie. Malheureusement en présence de conditions sévères, avec notamment des variations de température et surtout de pression importantes, l'expérience montre une fuite progressive de la graisse et une pénétration d'éléments agressifs, notamment de particules abrasives.

Le produit de remplissage utilisé dans ce procédé connu peut aussi être de l'huile, de préférence à forte viscosité. On dispose alors un joint d'étanchéité souple pour obturer le jeu de sortie. Malheureusement les joints connus se détériorent assez rapidement sous l'effet des variations de température et sous l'impact des particules abrasives.

Dans le cadre de la protection d'un système mécanique à mouvements limités contre un milieu agressif, la présente invention a pour but l'obtention simple d'une protection durable et sure, même lorsque le milieu agressif présente des variations de pression et de température importantes et charrie des particules abrasives.

Il convient de noter ici que le document EP-A 0 026 100 décrit un dispositif d'absorption de chocs à l'aide d'un elastomère qui est interposé entre deux pièces fonctionnelles et qui a pour fonction de transmettre d'une pièce à une autre des efforts de travail en service normal. Il ne doit se déformer de manière importante qu'en présence d'efforts bien supérieures et plus ou moins exceptionnels (chocs). Même à ce moment là, il doit transmettre partiellement les efforts d'une pièce à l'autre, sans permettre à ces pièces de venir au contact l'une de l'autre. Un tel dispositif n'est donc pas en mesure d'assurer une protection des pièces fonctionnelles contre un milieu agressif.

Ce but est atteint selon l'invention par le procédé tel que caractérisé par la revendication 1. En ce qui concerne des caractéristiques de mises en œuvre préférées de l'invention, référence est faite aux revendications secondaires.

A l'aide des figures schématiques ci-jointes, on va décrire ci-après, à titre non limitatif, comment l'invention peut être mise en œuvre. Il doit être compris que les éléments décrits et représentés peuvent, sans sortir du cadre de l'invention, être remplacés par d'autres éléments assurant les mêmes fonctions techniques. Lorsqu'un même élément est représenté sur plusieurs figures il y est désigné par le même signe de référence.

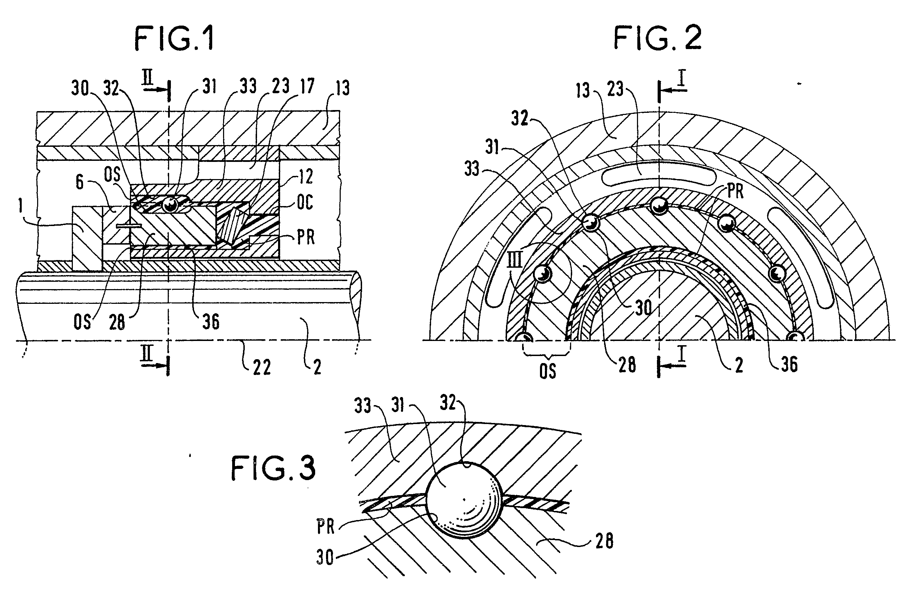

La figure 1 représente un demie vue d'un premier dispositif protégé par le procédé selon l'invention en coupe par un plan axial I-I de la figure 2.

La figure 2 représente une demie vue de même dispositif en coupe par un plan transversal II-II de la figure 1.

La figure 3 représente un détail III de la figure 2 à échelle agrandie.

La figure 4 représente une vue en coupe axiale d'une deuxième dispositif protégé par le procédé selon l'invention.

Le premier dispositif décrit à titre d'exemple est destiné à assurer l'appui axial de l'arbre du moteur souterrain d'une turboforeuse. Il comporte un ensemble de pièces tournantes entraînées en rotation par l'arbre 2 tournant autour d'un axe 22 par rapport au corps externe 13 du moteur, et un ensemble de pièces non tournantes reliés à ce corps externe de manière à empêcher leur rotation autour de cet axe et à pouvoir transmettre une poussée axiale à ce corps.

Le premier ensemble comporte plusieurs anneaux de frottement tel que 1 se succédant axialement et pouvant être munis chacun de deux surfaces de frottement opposées dont une seule est représentée et qui frottent chacune contre l'unique surface de frottement d'une anneau de frottement tel que 6 du deuxième ensemble. Ce dernier comporte en outre un élément d'appui élastique 17 poussant une face arrière de l'anneau de frottement 6 de cet ensemble dans une direction axiale vers l'avant pour l'appuyer de manière permanente contre l'anneau de frottement 1 du premier ensemble, tout en permettant un petit coulissement axial de ces anneaux, et une armature 12 pour servir d'appui arrière à cet élément de poussée. Le deuxième ensemble comporte encore une douille de guidage 28 mobile par rapport à l'armature 12, cette douille étant coaxiale à l'arbre 22 et portant rigidement l'anneau de frottement 6 de cet ensemble, et une douille de guidage 33 fixe par rapport à l'armature 12. Des rainures mobiles 30 et fixes 32 s'étendent axialement et sont creusées face à face dans les faces en regard de la douille mobile et de la douille fixe, respectivement. Une bille 31 est disposée dans chaque paire de rainures se faisant face.

Ces billes sont disposées avec un jeu suffisant pour permettre un coulissement axial aisé de la douille mobile par roulement des billes sur les parois de ces rainures. Quoique ce jeu soit en même temps suffisamment petit pour éviter un jeu angulaire de la douille mobile par rotation autour de l'axe de l'arbre, il est apparu qu'il permettait à la douille mobile d'effectuer aisément une inclinaison périodique permettant une répartition homogène de l'effort axial sur les surfaces de frottement, malgré d'inévitables petits décalages angulaires de ces surfaces par rapport au plan perpendiculaire à l'axe 22. De tels décalages résultent de la construction du moteur ou des contraintes de flexion qu'il subit pendant le forage d'un puits courbé et seraient susceptibles d'entrainer une détérioration rapide des surfaces de frottement si la douille mobile ne pouvait pas s'incliner.

L'armature 12 solidaire du corps externe 13 présente la forme d'une plaque annulaire percée de lumières 23 pour le passage axial d'une boue de forage qui fournit l'énergie motrice à la turbine. Les rainures mobiles comportent deux butées d'extrémité empêchant un échappement axial des billes. Les anneaux de frottement sont fabriqués et montés pour que l'angle d'inclinaison périodique imposé à l'anneau 6 par l'inclinaison parasite maximale prévisible de l'anneau de frottement 1, cet angle soit inférieur à 1/100 de radian. D'autre part, dans le cas d'une turboforeuse de type habituel la courbure éventuelle du puits ne risque que très exceptionnellement d'amener cet angle au-dessus de cette valeur.

L'élément d'appui axial 17 est par exemple constitué par une rondelle d'acier tronconique du type «Belleville». Il est comprimé entre la face arrière de la douille mobile 28 et l'armature 12.

La course des billes 31 est limitée seulement par une butée arrière dans les rainures fixes 32. Ceci permet d'introduire les billes d'abord radialement dans les rainures mobiles pendant le montage du dispositif lorsque la douille mobile n'est encore que partiellement engagée axialement dans la douille fixe 33 à partir de l'avant de cette dernière, puis de faire glisser ces billes axialement vers l'arrière dans les rainures fixes et mobiles à la fois, puis de pousser la douille mobile axialement vers l'arrière en poussant la rondelle 17 jusqu'à ce que cette douille atteigne sa position de service, les billes reposant alors sur la butée arrière de la rainure mobile.

Le système mécanique à protéger précédemment mentionné comporte les éléments suivants: l'enceinte rigide est constituée par la douille de guidage fixe 33, qui constitue en même temps une pièce fonctionnelle. La pièce de liaison est constituée par la douille de guidage mobile 28, qui constitue aussi en même temps une pièce fonctionnelle. Les autres pièces fonctionnelles sont constituées par les billes 31 et par l'élément d'appui élastique 17. L'ouverture de sortie OS est l'ouverture annulaire de la douille fixe 33 dans le plan transversal de contact entre la douille mobile 28 et l'anneau 6.

Des ouvertures de compensation OC sont par ailleurs percées à l'arrière de la douille fixe 33.

Conformément à la présente invention, et par exemple après l'introduction des billes 31, le volume intérieur à la douille de guidage est rempli d'un liquide qui est ensuite évacué et qui laisse, sur les parois de ce volume, le revêtement d'adhérence précédemment mentionné. Ce liquide est bien entendu adapté aux matériaux en présence.

Il peut être également déposé par application préalable par pulvérisation ou au pinceau, sur les pièces constitutives du mécanisme afin de permettre un séchage adéquat.

On procède ensuite à l'opération de remplissage précédemment mentionnée. Pour cela les ouvertures de compensation OC sont obturées l'axe 22 est disposé verticalement avec l'ouverture de sortie en haut et les billes 31 sont amenées au contact du fond de gorge 40 par gravité, la douille mobile étant alors au point haut de sa course, au simple contact de la rondelle 17.

Le matériau de départ liquide et très fluide est versé lentement dans l'ouverture de sorite OS jusqu'à remplissage. Des opérations de mise sous vide et recompression atmosphèrique permettent l'élimination de bulles dans le produit.

La polymérisation dudit produit de remplissage élastique se fait ensuite à l'ambiante ou à une température plus pélevée permettant de raccourcir la durée de l'opération; ce produit est désigné sur les figures par la référence PR.

Il est a remarquer que l'expérience montre que, contrairement à ce qu'on aurait pu craindre, ce produit élastique ne gène pas le fonctionnement du système. Plus particulièrement il semble que, pendant le début du fonctionnement du système de nombreuses liaisons chimiques au sein de ce produit soient rompues dans les zones où les billes 31 roulent au contact des flancs des rainures 30 et 32, et où apparaissent des contraintes élevées, supérieures à 100 newtons par millimètre carré. Le produit de remplissage se comporte alors à peu près comme un liquide alors que, dans toutes les autres zones intérieures à l'enceinte de protection, il conserve sa cohérence interne.

Non seulement ce produit ne gène pas le fonctionnement du système précédemment décrit, mais il y contribue directement. Il constitue en effet un moyen de centrage qui tend à maintenir les billes 31 dans un même plan, c'est-à-dire dans des positions réparties sur un cercle coaxial aux douilles fixe et mobile lorsque celles-ci sont coaxiales. Or c'est à partir d'un tel ensemble de positions de départ que la douille mobile peut s'incliner le plus facilement autour de n'importe quel axe d'inclinaison.

Par ailleurs, les variations du volume du produit PR intérieurs à l'enceinte 33 dûs aux mouvements des pièces fonctionnelles sont facilités ou autorisés par la déformation élastique du produit coulé dans les orifices de compensation OC, sans déchirement du produit ni décollement de celui-ci des parois métalliques.

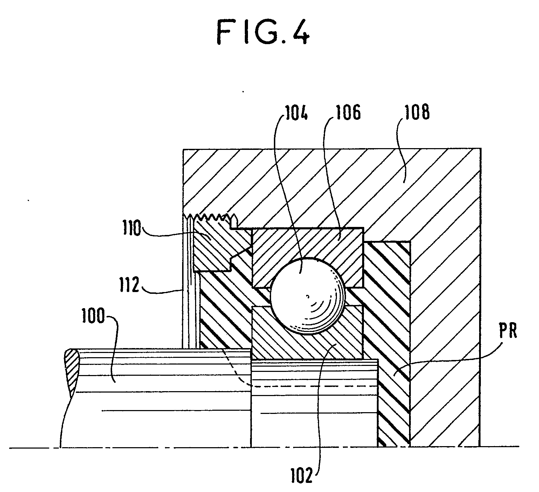

Un deuxième système mécanique protégé selon l'invention est représenté par la figure 4.

Il s'agit d'un palier pour un arbre 100 effectuant des rotations alternatives d'amplitude limitée, par exemple 10° degrés d'angle.

Cet arbre est supporté transversalement par un roulement à billes comportant une cage intérieure 102, des billes 104 et une cage extérieure 106 montée dans le boîtier 108. Ce dernier est partiellement fermé par une rondelle épaisse 110 qui est vissée dans ce boîtier. Toutes ces pièces sont constituées d'acier. Le produit de remplissage PR précédemment décrit remplit ce boîtier.

Les pièces fonctionnelles sont ici consitutées par les cages intérieure 102 et extérieure 106 et par les billes 104. La pièce de liaison est constituée par l'arbre 100 et l'enceinte de protection par le boîtier 108 et la rondelle 110, l'ouverture de sortie étant le trou central 112 de la rondelle 110.

Le jeu de sortie peut être diminué si on réalise la rondelle 112 en caoutchouc, cette rondelle étant alors fixée par collage.

De manière générale le produit de remplissage selon l'invention doit répondre, au moins de préférence, aux conditions suivantes:

– Excellente adhérence au métal (ou autre matériau) de l'enceinte de protection et de la pièce de liaison ,si possible du même ordre sinon supérieure à sa résistance propre (cisaillement ou traction), soit des résistances comprises entre 3 et 30 N/mm² (traction).– Le produit sera soumis du fait des mouvements de la mécanique à des contraintes de déchirement et d'allongement interne. Il devra s'accommoder de ces mouvements internes par une résistance importante au déchirement, comprise entre 20 et 200 N/cm, associée à un allongement très élevé (de 150 à 700%).

Le travail mécanique et interne du produit peut être générateur de chaleur que le produit doit aisément évacuer. La conductibilité thermique doit donc être aussi bonne que possible, par exemple 0,23 W/mK, et en tous cas supérieur à 0,1 W/mK.

Certaines ambiances de travail justifiant plus particulièrement la présence du produit, présentent des charges en sable ou poussières abrasives. Ces materiaux très abrasifs requièrent donc de la part du produit une résistance importante à l'abrasion. Les matériaux de type élastomères se révèlent avoir un résistance à l'abrasion très élevée et en particulier pour des duretés comprises entre 20 et 70 Shores A.

Les mouvements du système mécanique génèrent des déformations du produit qui induisent donc des efforts contraires. Ces efforts seront aussi faibles que possible et peuvent être caractérisés par un module d'Young aussi faible que possible et pouvant se situer de préférence entre 0,5 et 20 N/mm².

Le produit peut être choisi dans la gamme des chlorosilanes ou des siloxanes spéciaux tels que ceux vendus par la Société Française Rhône Poulenc sous la marque de commerce Rhodorsil EVF.

Par contre des caoutchoucs naturels ou des élastomères artificiels tels que le polybutadiène qui pourraient convenir du point de vue comportement mécanique et adhérisation, sont plus délicats à la mise en œuvre et pourraient nécessiter des outillages de mise en place très coûteux.

### Revendications

1. Procédé de protection d'un système mécanique à mouvements limités contre un milieu agressif, ce système comportant
– des pièces fonctionnelles (17, 28, 31, 33) qui coopérent entre elles par des surfaces fonctionnelles venant en contact les unes avec les autres pour se transmettre directement des forces de travail et assurer ainsi le fonctionnement du système,
– et au moins une pièce de liaison (28) solidaire d'une pièce fonctionnelle (28) pour assurer la transmission de mouvements à l'extérieur du système,
– une enceinte rigide de protection (33) entourant les surfaces fonctionnelles ainsi qu'un espace intérieur permettant les déplacements de ces surfaces, cette enceinte présentant au moins une ouverture de sortie (OS) qui permet le passage de la pièce de liaison en laissant un jeu de sortie autour de celle-ci pour en permettre les mouvements,
– ce procédé comportant une opération de remplissage au cours de laquelle on remplit l'enceinte de protection avec un produit de remplissage permettant les déplacements des surfaces fonctionnelles tout en empêchant le milieu extérieur de venir au contact de ces surfaces,
– ce procédé étant caractérisé par le fait que le produit de remplissage (PR) est un haut polymère élastique mou susceptible d'être obtenu par une opération de solidification créant des liaisons chimiques dans un matériau de départ liquide sans changement sensible de volume, ce haut polymère présentant une résistance en traction comprise entre 3 et 30 newtons par millimètre carré, une résistance au déchirement au moins égale à 20 newtons par centimètre et un allongement élastique au moins égal à 150%, de manière que les déformations de ce produit pendant le fonctionnement du système soient réversibles et que la résistance opposée par ce produit à ces déformations ne modifie pas sensiblement le fonctionnement du système,
– ladite opération de remplissage étant réalisée avec ce matériau de départ liquide et étant suivie de ladite opération de solidification,
– cette opération de remplissage étant précédée d'une opération de préparation de surface au cours de laquelle au moins la surface interne de ladite enceinte de protection (33) et la surface de la pièce de liaison (28) à l'intérieur de cette enceinte reçoivent au moins au voisinage de ladite ouverture de sortie (OS), un revêtement d'adhérence assurant au produit de remplissage une adhérence sur ces surfaces au moins égale à 3 newtons par millimètre carré en traction,
– ledit jeu de sortie étant prévu suffisant pour permettre les mouvements de la pièce de liaison sans dépasser les limites d'élasticité du produit de remplissage au voisinage de l'ouverture de sortie (OS).

2. Procédé selon la revendication 1, caractérisé par le fait que le produit de remplissage (PR) présente une conductibilité thermique supérieure à 0,1 W/m K.

3. Procédé selon la revendication 1, caractérisé par le fait que le produit de remplissage (PR) présente une dureté comprise entre 20 et 70 Shore A.

4. Procédé selon la revendication 1, caractérisé par le fait que le produit de remplissage (PR) présente un module d'Young compris entre 0,5 et 20 N/mm².

5. Procédé selon la revendication 1, caracterise par le fait que le produit de remplissage (PR) est choisi dans le groupe constitué par les chlorosilanes et les siloxanes, de manière à présenter en outre une bonne résistance chimique.

6. Procédé selon l'une des revendications 1 à 5, dans lequel lesdites pièces fonctionnelles (17, 28, 31, 33) sont constituées de métal et supportent des contraintes supérieures à 100 newtons/mm² dans les zones adjacentes auxdites surfaces fonctionnelles en contact avec d'autres surfaces fonctionnelles.

7. Procédé selon la revendication 1, caractérisé par le fait qu'on perce dans ladite enceinte de protection (33) au moins une ouverture de compensation (OC) pour accroître l'intervalle des variations possibles du volume intérieur de cette enceinte grâce à une déformation élastique du produit de remplissage (PR) à travers cette ouverture.

**Patentansprüche**

1. Verfahren zum Schutz eines mechanischen Systems mit begrenzten Bewegungen vor einem aggressiven Milieu, wobei dieses System aufweist
– funktionelle Teile (17, 28, 31, 33), die untereinander über funktionelle Oberflächen zusammenwirken, die miteinander in Kontakt treten, um Arbeitskräfte direkt zu übertragen und so den Betrieb des Systems zu bewirken,
– und mindestens ein Verbindungsstück (28), das mit einem funktionellen Teil (28) fest verbunden ist, um die Übertragung von Bewegungen aus dem System heraus zu bewirken,
– eine starre Schutzkammer (33), die die funktionellen Oberflächen und einen inneren Raum umgibt und die Verschiebungen dieser Oberflächen erlaubt, wobei diese Kammer mindestens eine Ausgangsöffnung (OS) aufweist, die den Durchgang des Verbindungsstücks erlaubt und um dieses herum ein Ausgangsspiel lässt, um die Bewegungen zu ermöglichen,
– wobei dieses Verfahren ein Füllen aufweist, während dem die Schutzkammer mit einem Füllprodukt gefüllt wird, das die Verschiebungen der funktionellen Oberflächen erlaubt, aber das äussere Milieu daran hindert, mit diesen Oberflächen in Kontakt zu treten,
dadurch gekennzeichnet, dass das Füllprodukt (PR) ein weiches elastisches Hochpolymer ist, das durch einen Verfestigungsvorgang erhalten werden kann, der chemische Verbindungen in einem flüssigen Ausgangsmaterial ohne wesentliche Volumenänderung erzeugt, wobei dieses Hochpolymer einen Zugwiderstand zwischen 3 und 30 Newton pro Quadratmillimeter, einen Reisswiderstand von mindestens gleich 20 Newton pro Zentimeter und eine elastische Längsdehnung von mindestens gleich 150% aufweist, so dass die Verformungen dieses Produkts während des Betriebs des Systems reversibel sind und der von diesem Produkt gegen diese Verformungen erzeugte Widerstand den Betrieb des Systems nicht wesentlich verändert,

– wobei das Füllen mit diesem flüssigen Ausgangsmaterial durchgeführt und von dem Verfestigungsvorgang gefolgt wird,

– wobei diesem Füllen eine Oberflächenvorbereitung vorausgeht, während deren mindestens die innere Oberfläche der Schutzkammer (33) und die Oberfläche des Verbindungsstücks (28) innerhalb dieser Kammer mindestens in der Nähe der Ausgangsöffnung (OS) einen Haftbelag erhalten, der dem Füllprodukt eine Zughaftung auf diesen Oberflächen von mindestens gleich 3 Newton pro Quadratmillimeter verleiht,

– wobei das Ausgangsspiel ausreichend gross vorgesehen ist, um die Bewegungen des Verbindungsstücks zu ermöglichen, ohne die Elastizitätsgrenzen des Füllprodukts in der Nähe der Ausgangsöffnung (OS) zu überschreiten.

2. Verfahren nach Anspruch 1, dadurch gekennzeichnet, dass das Füllprodukt (PR) eine Wärmeleitfähigkeit von mehr als 0,1 W/mK aufweist.

3. Verfahren nach Anspruch 1, dadurch gekennzeichnet, dass das Füllprodukt (PR) eine Härte von zwischen 20 und 70 Shore A aufweist.

4. Verfahren nach Anspruch 1, dadurch gekennzeichnet, dass das Füllprodukt (PR) einen Young'schen Modul von zwischen 0,5 und 20 N/mm² aufweist.

5. Verfahren nach Anspruch 1, dadurch gekennzeichnet, dass das Füllprodukt (PR) aus der Gruppe ausgewählt wird, die von den Chlorsilanen und den Siloxanen gebildet wird, um ausserdem eine gute chemische Resistenz zu bieten.

6. Verfahren nach einem der Ansprüche 1 bis 5, bei dem die funktionellen Teile (17, 28, 31, 33) aus Metall bestehen und in den Kammern nahe den funktionellen Oberflächen, die in Kontakt mit anderen funktionellen Oberflächen stehen, Kräfte von mehr als 100 Newton/mm² aushalten.

7. Verfahren nach Anspruch 1, dadurch gekennzeichnet, dass man in der Schutzkammer (33) mindestens eine Kompensationsöffnung (OC) bohrt, um den Bereich der möglichen Änderungen des inneren Volumens dieser Kammer aufgrund einer elastischen Verformung des Füllprodukts (PR) durch diese Öffnung zu erhöhen.

## Claims

1. A method of protecting a limited-displacement mechanical system from an aggressive medium, this system comprising

– operative parts (17, 28, 31, 33) which co-operate with one another via operative surfaces which come into contact with each other for directly transmitting working forces and thus ensuring operation of the system,

– and at least one link member (28) stationary to an operative part (28) for transmitting movement to the outside of the system,

– a rigid protection chamber (33) surrounding the operative surfaces as well as an inner space permitting the displacements of these surfaces, this chamber presenting at least one outlet opening (OS) which permits the passage of the link member and leaves an outlet clearance around the link member to permit the movements,

– this method comprising a filling operation during which the protection chamber is filled with a filler product permitting the displacement of the operative surfaces while preventing the outer medium from coming into contact with these surfaces,

– this method being characterized in that the filler product (PR) is a soft resilient high polymer which can be obtained by a solidification operation creating chemical bonds in a liquid intial material without essential change of volume, this high polymer presenting a traction resistance comprised between 3 and 30 Newton per square millimeter, a tear resistance at least equal to 20 Newton per centimeter and a resilient elongation at least equal to 150%, so that the deformations of this product during the operation of the system are reversible and that the resistance opposed by this product to these deformations does not substantially change the operation of the system,

– said filling operation being realized with this initially operation,

– this filling operation being preceded by a surface preparation operation during which at least the inner surface of said protection chamber (33) and the surface of the link member (28) inside this chamber receive at least in the neighbourhood of said outlet opening (OS) an adherence coating giving the falling product an adherence on these surfaces at least equal to 3 Newton per square millimeter in traction,

– said outlet clearance being sufficient for permitting the movements of the link member without exceeding the elasticity limits of the filling product in the neighbourhood of the outlet opening (OS).

2. A method according to claim 1, characterized in that the filler product (PR) presents a thermal conductivity higher than 0,1 W/m K.

3. A method according to claim 1, characterized in that the filler product (PR) presents a hardness comprised between 20 and 70 Shore A.

4. A method according to claim 1, characterized in that the filler product (PR) presents a Young module comprised between 0,45 and 20 N/mm².

5. A method according to claim 1, characterized in that the filler product (PR) is chosen from the group constituted by the chlorosilanes and the siloxanes, so as to further present a good chemical resistance.

6. A method according to one of claims 1 to 5, in which said operative parts (17, 28, 31, 33) are constituted of metal and undergo stresses higher than 100 Newton/mm² on the zones adjacent to said operative surfaces in contact with other operative surfaces.

7. A method according to claim 1, characterized in that at least one compensation opening (OC) is bored into said protection chamber (33) in order to increase the range of the possible variations of the inner volume of this chamber due to an elastic deformation of the filler product (PR) through this opening.

# FIG.1

# FIG.2

# FIG.3

0 130 494

# FIG. 4